(19) Europäisches Patentamt / European Patent Office / Office européen des brevets

(11) **EP 2 908 154 B1**

(12) **FASCICULE DE BREVET EUROPEEN**

(45) Date de publication et mention
de la délivrance du brevet:
**31.08.2016 Bulletin 2016/35**

(51) Int Cl.:
***G01S 19/21*** (2010.01)     ***G01S 19/30*** (2010.01)

(21) Numéro de dépôt: **15153967.3**

(22) Date de dépôt: **05.02.2015**

(54) **Méthode de corrélation d'un signal de radio-navigation par satellite reçu et dispositif de corrélation mettant en oeuvre la méthode**

Korrelationsmethode eines über Satellit empfangenen Funknavigationssignals, und Korrelationsvorrichtung, die diese Methode anwendet

Method for correlating a received satellite radio-navigation signal and correlation device implementing the method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2014 FR 1400404**

(43) Date de publication de la demande:
**19.08.2015 Bulletin 2015/34**

(73) Titulaire: **Thales**
**92400 Courbevoie (FR)**

(72) Inventeurs:
• **Raimondi, Mathieu**
  **31100 Toulouse (FR)**
• **Al Bitar, Hanaa**
  **31100 Toulouse (FR)**
• **Fernet, Charles**
  **31100 Toulouse (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**US-A1- 2009 189 808**

• **MUTHURAMAN KANNAN ET AL: "Performance Evaluation of L2C Data/Pilot Combined Carrier Tracking", GNSS 2008 - PROCEEDINGS OF THE 21ST INTERNATIONAL TECHNICAL MEETING OF THE SATELLITE DIVISION OF THE INSTITUTE OF NAVIGATION (ION GNSS 2008), THE INSTITUTE OF NAVIGATION, 8551 RIXLEW LANE SUITE 360 MANASSAS, VA 20109, USA, 19 septembre 2008 (2008-09-19), pages 1658-1666, XP056002763,**
• **TRAN ET AL: "Performance Evaluations of the New GPS L5 and L2 Civil (L2C) Signals", NAVIGATION, INSTITUTE OF NAVIGATION, FAIRFAX, VA, US, vol. 51, no. 3, 1 décembre 2004 (2004-12-01), pages 199-212, XP056004460, ISSN: 0028-1522**

**EP 2 908 154 B1**

**Description**

L'invention concerne le domaine des récepteurs de signaux de radio-navigation par satellite, encore appelés signaux GNSS (Global Navigation Satellite System). L'invention s'applique notamment aux systèmes de navigation par satellite GALILEO ou GPS.

Plus précisément, l'invention concerne les signaux constitués d'une somme cohérente de deux signaux en phase, tels que le signal E1 du système GALILEO et porte sur une méthode et un dispositif de corrélation de tels signaux.

Le signal E1 du système de navigation par satellite GALILEO est composé d'une somme cohérente de deux signaux. Le premier signal, appelé signal pilote, est modulé par un premier code d'étalement et est utilisé principalement pour réaliser des mesures de distance entre un satellite et un récepteur du signal dans le but de réaliser des calculs de positionnement. Le second signal est un signal qui transporte des données, il est modulé par un second code d'étalement, chaque période du code étant associée à un symbole à émettre. Un symbole est obtenu par application d'une modulation binaire au bit à transmettre. Les deux codes d'étalement sont différents mais de périodes identiques, par exemple dans le cas du signal E1, cette période est égale à 4 ms.

Lors de la réception du signal, les traitements effectués ont notamment pour but de détecter le début d'une période du code d'étalement du signal pilote mais aussi de démoduler les données du second signal. Pour cela, un calcul de corrélation est réalisé entre une réplique locale du premier code d'étalement avec le signal. Le résultat de la corrélation est ensuite intégré sur plusieurs périodes du code (par exemple 25 périodes) pour lutter contre l'influence du bruit thermique et permettre l'identification d'un pic de corrélation.

Le résultat de la corrélation est perturbé par deux sources de bruit distinctes. En premier lieu, un bruit thermique perturbe le signal lors de sa transmission et vient impacter le résultat de la corrélation avec le code local. Un moyen traditionnel pour lutter contre l'influence du bruit thermique consiste à augmenter la durée d'intégration. Cependant, la présence du signal de données modulé avec un second code d'étalement perturbe également le résultat de la corrélation du signal global avec le premier code d'étalement car l'intercorrélation entre le signal pilote et le signal de données n'est pas nulle. L'impact du niveau d'intercorrélation entre les deux signaux sur le résultat de la corrélation peut être non négligeable en particulier pour les applications qui nécessitent une précision accrue sur l'information de positionnement. En outre, le bruit lié à l'intercorrélation entre le signal pilote et le signal de données peut devenir plus impactant que le bruit thermique pour les forts rapports signal à bruit.

Les récepteurs GNSS connus utilisent le plus souvent une durée d'intégration cohérente élevée pour lutter contre l'influence du bruit. Or cette solution ne permet pas de diminuer le niveau d'intercorrélation entre le signal pilote et le signal de données.

De tels récepteurs sont par exemple décrits dans les documents US2009/189808, « Performance évaluation of L2C data/pilot combined carrier tracking, Muthuraman Kannan et al. » et «Performance évaluations of the new GPS L5 and L2 civil (L2C) signais, Tran et al. »

L'invention propose une méthode et un dispositif de corrélation d'un signal de radio-navigation par satellite qui permet de lutter contre l'influence de l'intercorrélation entre deux signaux sommés de façon cohérente pour construire le signal GNSS. L'invention permet de minimiser le niveau de bruit global qui affecte le résultat de la corrélation entre le code local et le signal GNSS. Elle s'applique avantageusement aux signaux GALILEO E1 mais également à tout autre signal de radio-navigation composé de deux signaux modulés par deux codes d'étalement distincts et sommés de façon cohérente.

L'invention a pour objet une méthode de corrélation d'un signal de radio-navigation par satellite reçu composé d'un premier signal pilote modulé avec un premier code d'étalement et d'un second signal de données modulé avec un second code d'étalement primaire de longueur identique à celle du premier code d'étalement, ledit second signal de données étant en outre modulé avec une séquence secondaire comprenant une pluralité de chips, la durée d'un chip étant égale à un multiple de la longueur du second code d'étalement primaire, le premier signal pilote et le second signal de données étant synchrones, ladite méthode de corrélation comprenant les étapes suivantes :

- Des premières corrélations, sur une pluralité N de périodes dudit premier code d'étalement, du signal de radio-navigation avec ledit premier code d'étalement,
- La sélection, parmi les N premières corrélations, d'un sous ensemble contenant un nombre M de corrélations, ledit sous-ensemble étant choisi en fonction d'une estimation du rapport signal à bruit du signal reçu et du nombre de paires de chips de signes opposés parmi les chips de ladite séquence secondaire,
- L'intégration cohérente des M corrélations dudit sous-ensemble.

Selon un aspect particulier de l'invention, le nombre M de corrélations dudit sous-ensemble est déterminé par simulation, ledit nombre M étant celui qui permet d'obtenir, sur le résultat d'intégration cohérente des M corrélations, le niveau de bruit global le plus faible en fonction d'un rapport signal à bruit donné et du nombre de paires de chips de signes opposés parmi les chips de ladite séquence secondaire.

Selon un aspect particulier de l'invention, ledit sous-ensemble contient au moins les premières corrélations en phase avec les chips de ladite séquence secondaire appartenant aux paires de chips de signes opposés.

Selon un mode particulier de réalisation de l'invention, ladite séquence secondaire est un code d'étalement secondaire.

Selon un mode particulier de réalisation de l'invention, ladite séquence secondaire est une séquence de données dont les chips sont des symboles binaires obtenus par modulation de bits de données, ladite méthode de corrélation comprenant en outre des secondes corrélations, sur une pluralité N de périodes dudit second code d'étalement, du signal de radio-navigation avec ledit second code d'étalement pour en déduire les valeurs des chips de ladite séquence secondaire.

Selon un mode particulier de réalisation de l'invention, l'estimation du rapport signal à bruit du signal reçu est déterminée à partir du résultat d'intégration cohérente des M corrélations.

Selon un aspect particulier de l'invention, le résultat d'intégration cohérente des M corrélations est utilisé comme entrée d'un discriminateur de code ou de phase ou de fréquence.

Selon un aspect particulier de l'invention, ledit signal est du type GALILEO E1.

L'invention a également pour objet un dispositif de corrélation d'un signal de radio-navigation par satellite reçu composé d'un premier signal pilote modulé avec un premier code d'étalement et d'un second signal de données modulé avec un second code d'étalement primaire de longueur identique à celle du premier code d'étalement, ledit second signal de données étant en outre modulé avec une séquence secondaire comprenant une pluralité de chips, la durée d'un chip étant égale à un multiple de la longueur du second code d'étalement primaire, le premier signal pilote et le second signal de données étant synchrones, le dispositif de corrélation comprenant:

- Un premier corrélateur pour effectuer des premières corrélations, sur un nombre entier N au moins égal à un de périodes dudit premier code d'étalement, du signal de radio-navigation avec ledit premier code d'étalement,
- Un sélecteur pour sélectionner, parmi les N premières corrélations, un sous ensemble contenant un nombre M de corrélations, ledit sous-ensemble étant choisi en fonction d'une estimation du rapport signal à bruit du signal reçu et du nombre de paires de chips de signes opposés parmi les chips de ladite séquence secondaire,
- Un intégrateur pour effectuer l'intégration cohérente des M corrélations dudit sous-ensemble.

Selon une variante particulière du dispositif selon l'invention, celui-ci comprend en outre un second corrélateur pour effectuer des secondes corrélations, sur une pluralité N de périodes dudit second code d'étalement, du signal de radio-navigation avec ledit second code d'étalement pour en déduire les valeurs des chips de ladite séquence secondaire.

L'invention a également pour objet un récepteur de signaux de radio-navigation par satellite comprenant un dispositif de corrélation selon l'invention, un programme d'ordinateur comportant des instructions pour l'exécution de la méthode de corrélation d'un signal de radio-navigation par satellite selon l'invention, lorsque le programme est exécuté par un processeur et un support d'enregistrement lisible par un processeur sur lequel est enregistré un programme comportant des instructions pour l'exécution de la méthode de corrélation d'un signal de radio-navigation par satellite selon l'invention, lorsque le programme est exécuté par un processeur.

D'autres caractéristiques et avantages de la présente invention apparaîtront mieux à la lecture de la description qui suit en relation aux dessins annexés qui représentent :

- La figure 1, un organigramme de la méthode de corrélation d'un signal de radio-navigation selon l'invention,
- La figure 2, un diagramme permettant de déterminer le nombre optimum de sorties de corrélation à intégrer pour minimiser l'impact du bruit total sur la fonction de corrélation du signal,
- La figure 3, un schéma illustrant le principe de sélection de corrélations en vue de leur intégration cohérente,
- La figure 4, un synoptique d'un dispositif de corrélation selon l'invention,
- La figure 5, un diagramme illustrant la puissance de bruit en sortie de corrélateur en fonction du rapport signal à bruit avec et sans application de l'invention,
- La figure 6, un synoptique d'un récepteur GNSS selon l'invention.

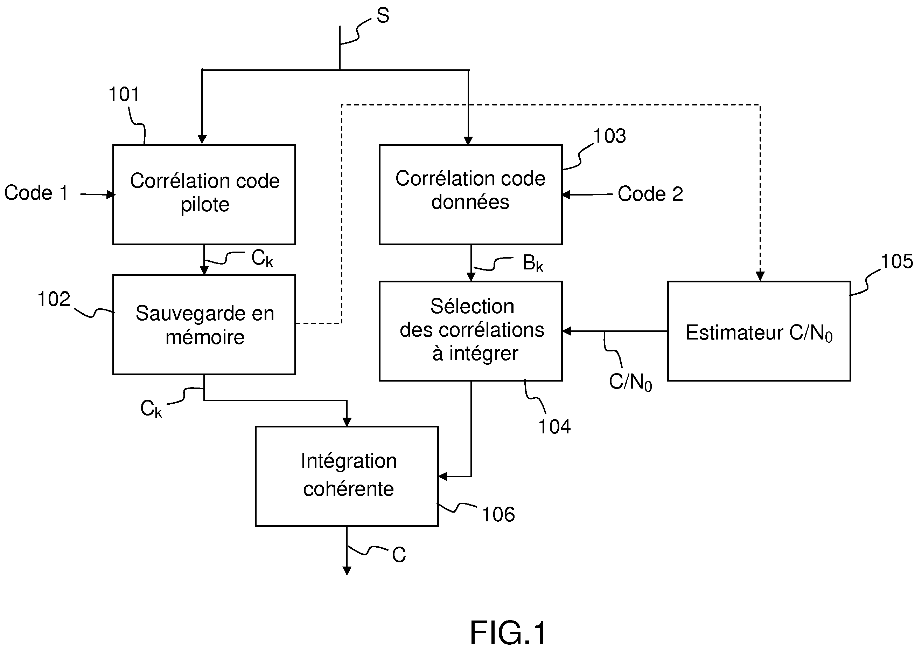

La figure 1 schématise, sur un organigramme, les étapes de mise en oeuvre de la méthode, selon l'invention, de corrélation d'un signal de radio-navigation.

Dans une première étape 101, le signal de radio-navigation reçu S est corrélé avec une réplique locale du premier code d'étalement code1 associé au signal pilote. La corrélation 101 est réalisée sur une durée égale à celle du code d'étalement, par exemple 4 ms dans le cas du signal GALILEO E1.

Le résultat de la corrélation (en l'absence de bruit) entre le premier code code1 et le signal reçu S peut être formalisé via la relation suivante :

$$C_k = \frac{1}{N} \cdot \int_0^{N.T} (C'_{E1-C}(t-\tau) + C'_{E1-B}(t-\tau)).C_{E1-C}(t)dt = 1 + X_{B/C} \quad (1)$$

C'$_{E1-C}$ est le code d'étalement du signal pilote reçu.

C'$_{E1-B}$ est le code d'étalement du signal de données reçu.

C$_{E1-C}$ est le code d'étalement du signal pilote généré localement.

La relation (1) fait apparaitre un terme d'intercorrélation X$_{B/C}$ entre le code d'étalement du signal de données reçu et le code d'étalement du signal pilote généré localement. L'invention vise à lutter contre l'influence de ce terme d'intercorrélation.

Les résultats de corrélation C$_k$ sont sauvegardés 102 sur un horizon temporel donné. Par exemple on sauvegarde dans une mémoire tampon du type FIFO plusieurs résultats de corrélation C$_k$ en vue de leur accumulation.

Successivement ou simultanément, le signal reçu S est également corrélé 103 avec une réplique locale du second code d'étalement code2 associé au signal de données.

La démodulation du signal de données aboutit à la récupération des bits B$_k$ émis via cette voie de données.

A partir des bits B$_k$ et d'une estimation 105 du rapport signal à bruit C/N0, une sélection 140 de certains résultats de corrélation sauvegardés est effectuée.

Enfin, une intégration cohérente 106 des résultats de corrélation sélectionnés est réalisée.

Les différentes étapes du procédé selon l'invention peuvent être exécutées dans un ordre différent de celui présenté ci-dessus. En particulier, en fonction de contraintes d'implémentation, les étapes du procédé peuvent être exécutées de façon simultanée ou séquentielle ou les deux.

La sélection des résultats de corrélation à intégrer est effectuée de la façon suivante. Tout d'abord, on identifie, dans la séquence des bits démodulés sur la voie de données, les paires de bits opposés. On détermine le nombre de paires de bits opposés dans la séquence. Comme le signal pilote et le signal de données sont sommés de façon cohérente et en phase pour obtenir le signal de radio-navigation, les deux signaux sont synchrones et on peut faire correspondre chaque bit démodulé B$_k$ à un résultat de corrélation C$_k$. En sélectionnant, pour leur intégration cohérente, les résultats de corrélation associés aux bits démodulés de l'ensemble des paires de bits opposés, on s'assure que l'intercorrélation entre le premier code d'étalement local code1 et le signal de données, modulé par le second code d'étalement, est nulle. En effet, deux bits opposés engendrent deux résultats d'inter corrélation de mêmes valeur absolue mais de signes opposés, leur influence s'annule donc mutuellement. Par exemple dans la séquence de bits {1 1 0 1 1 1 0 0}, il y a trois paires de bits opposés (0 1).

Cependant si la séquence de bits démodulés contient un faible nombre de paires de bits opposés, par exemple si cette séquence ne contient qu'un bit à 0 et tous les autres bits à 1, alors pour annuler l'intercorrélation il conviendrait de n'intégrer que deux résultats de corrélation ce qui présente l'inconvénient d'une faible résistance au bruit thermique.

Autrement dit, pour minimiser globalement l'influence du bruit sur le résultat C de l'intégration cohérente des corrélations unitaires, il convient de trouver un compromis entre un grand nombre de corrélations intégrées qui permet de minimiser le bruit thermique et un nombre plus faible, adapté à la séquence de bits démodulés, qui permet de lutter contre le bruit lié à l'intercorrélation entre les deux codes d'étalement (voie pilote et voie données).

Pour déterminer de façon optimale le nombre de corrélations à intégrer, une méthode possible consiste à simuler le niveau de bruit global obtenu en fonction du rapport signal à bruit affectant le signal reçu d'une part et le nombre de paires de bits opposés dans la séquence de bits démodulés d'autre part.

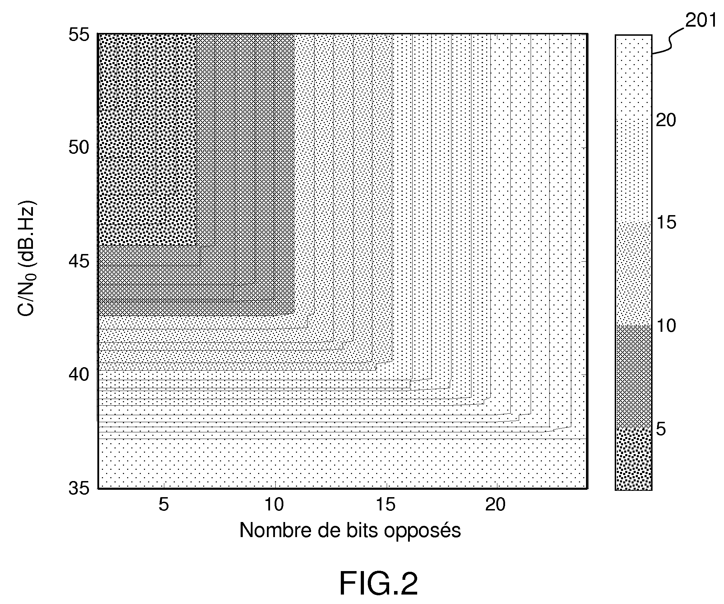

La figure 2 représente, sur un diagramme, le nombre optimal de corrélations à intégrer (représenté sur l'échelle 201 à droite) en fonction du rapport signal à bruit C/N0 (représenté en ordonnée) et du nombre de bits de valeurs opposées (représenté en abscisse). Dans l'exemple, obtenu par simulation, de la figure 2, le nombre de corrélateurs varie entre 1 et 25.

La figure 2 enseigne que, lorsque le rapport signal à bruit est faible (par exemple dans une plage de valeurs entre 35 et 40 dB.Hz sur la figure 2), le niveau de bruit thermique est beaucoup plus impactant que le niveau de l'intercorrélation. Dans un tel cas il est plus optimal d'utiliser le maximum de corrélations (dans l'exemple de la figure 2, 25 corrélations) pour bénéficier du gain d'intégration.

A l'inverse, lorsque le rapport signal à bruit est élevé (par exemple dans une plage de valeurs entre 50 et 55 dB.Hz), le niveau d'intercorrélation est plus impactant que le niveau de bruit thermique et il est alors plus avantageux d'adapter le nombre de corrélations à intégrer en fonction du nombre de bits opposés. On voit alors que plus le nombre de bits opposés est faible, plus il est avantageux de diminuer le nombre de corrélations à intégrer.

A partir d'une estimation du rapport signal à bruit et du nombre de bits opposés, il est donc possible de déterminer, à l'aide de la figure 2, le nombre optimum de corrélations à intégrer. Une fois ce nombre déterminé, on sélectionne en priorité les résultats sauvegardés de corrélation associés aux bits opposés puis on complète éventuellement avec d'autres résultats de corrélation si besoin.

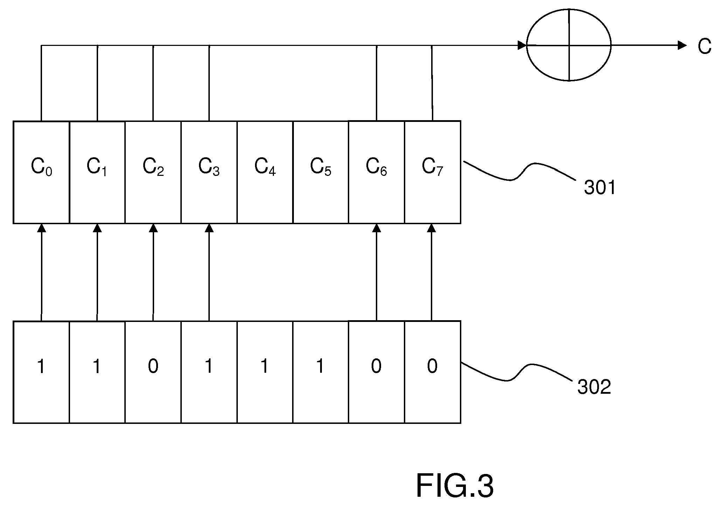

La figure 3 illustre, sur un exemple non limitatif, le principe de sélection des corrélations à accumuler pour la séquence de bits démodulés {1 1 0 1 1 1 0 0}. La séquence 301 correspond aux résultats de corrélation calculés successivement sur plusieurs périodes du code de la voie pilote. La séquence 302 correspond aux bits démodulés sur la voie donnée. Les voies pilote et données étant synchrones, on peut faire correspondre chaque résultat de corrélation à un bit de la séquence démodulée. Les corrélations $C_0$, $C_1$, $C_2$, $C_3$, $C_6$, $C_7$ sont sélectionnées pour être accumulées de façon cohérente.

En fonction du rapport signal à bruit, d'autres corrélations parmi $C_4$ et $C_5$ peuvent être également sélectionnées.

Selon un autre mode de réalisation de l'invention, le signal de données contenu dans le signal de radio-navigation peut être remplacé par un signal modulé avec un code d'étalement primaire et un code d'étalement secondaire pour lequel la durée d'un chip est égale à un multiple de la longueur du code d'étalement primaire.

Dans ce cas, les bits de données sont remplacés par les chips du code d'étalement secondaire dont les valeurs sont connues du récepteur. L'étape de sélection des paires de bits opposés est alors remplacée par la sélection des paires de chips de signes opposés dans le code d'étalement secondaire. Dans l'exemple de la figure 3, les bits démodulés de la séquence 302 peuvent également être remplacés par les symboles binaires associés dont les valeurs sont prises dans l'ensemble {-1 ;+1}.

De façon générale, le signal de données peut être vu comme un signal modulé avec un code d'étalement primaire et une séquence secondaire qui est soit une séquence de données, auquel cas il est nécessaire de démoduler ces données pour déterminer les valeurs des bits, soit une séquence d'étalement connue, auquel cas il n'est pas nécessaire d'effectuer la corrélation du signal avec cette séquence d'étalement puisque les valeurs des chips qui la compose sont connues.

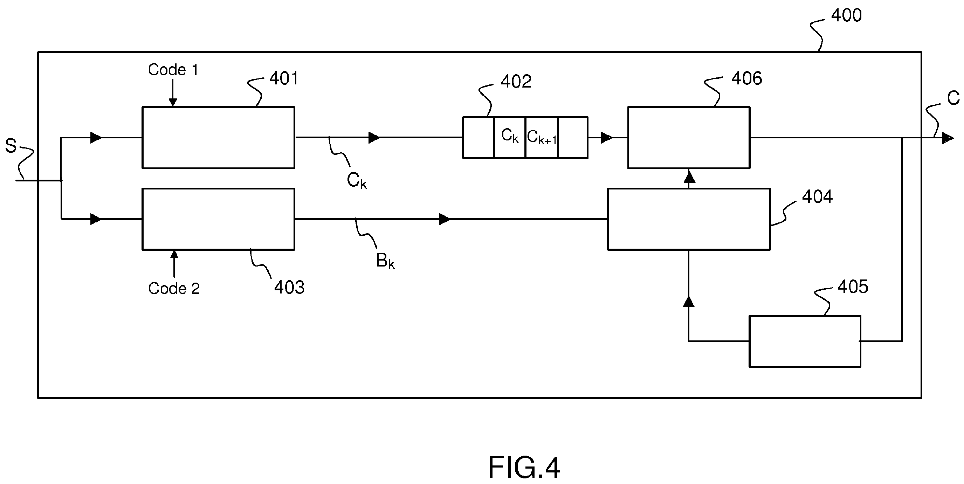

La figure 4 représente un schéma d'un dispositif 400 de corrélation d'un signal de radio-navigation S selon l'invention. Le dispositif 400 comprend des moyens adaptés pour mettre en oeuvre les différentes variantes du procédé selon l'invention tel que décrit via l'organigramme de la figure 1.

En particulier, le dispositif 400 comprend un premier corrélateur 401 pour corréler le signal reçu S avec un premier code code1 associé à une voie pilote. Les sorties $C_k$ du premier corrélateur 401 sont sauvegardées dans une mémoire tampon 402 en vue de leur intégration.

Le dispositif 400 comprend également un second corrélateur 403 pour corréler le signal reçu S avec un second code code2 associé à une voie de données et pour démoduler les bits $B_k$ véhiculés par cette voie.

Le dispositif 400 comprend en outre un module 405 d'estimation du rapport signal à bruit C/N0. Cette estimation peut être effectuée via des moyens externes à l'invention ou peut être réalisée à partir du résultat de l'intégration cohérente 406 des corrélations ou encore à partir des corrélations $C_k$ mémorisées (cas non représenté à la figure 4). Selon une variante particulière de l'invention, on utilise un système bouclé au sein duquel la sortie C de l'intégrateur 406 est utilisée pour mesurer le rapport signal à bruit qui sert ensuite à sélectionner les corrélations à intégrer. Dans un tel système, une phase de convergence doit être prévue pendant laquelle l'estimateur de rapport signal à bruit est biaisé par le niveau d'intercorrélation.

Le dispositif 400 comprend également un module de sélection 404 configuré pour sélectionner certaines corrélations $C_k$ mémorisées en fonction des bits démodulés $B_k$ et de l'estimation de rapport signal à bruit C/N0 et un accumulateur 406 pour intégrer de façon cohérente les corrélations sélectionnées.

Le dispositif 400 selon l'invention peut comprendre des éléments logiciels et/ou matériels. Les différents éléments qui le composent peuvent notamment être implémentés sous la forme d'un processeur qui peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le synoptique de la figure 4 est donné à titre illustratif et non limitatif, et il va de soi que toute variante d'implémentation, notamment consistant à regrouper certains modules au sein d'un même processeur, doivent être considérés comme équivalents et entrant dans la portée de l'invention.

Selon une variante de réalisation de l'invention, l'objectif visé peut également être d'obtenir une estimée précise du rapport signal à bruit à partir du résultat de l'intégration cohérente 406. Dans ce cas, il peut être préférable de chercher à annuler totalement le niveau de bruit lié à l'intercorrélation. Pour cela on préférera donc sélectionner uniquement les corrélations correspondant aux paires de bits opposés sans augmenter d'avantage la durée d'intégration cohérente et ce même si le niveau de bruit thermique est par ailleurs élevé.

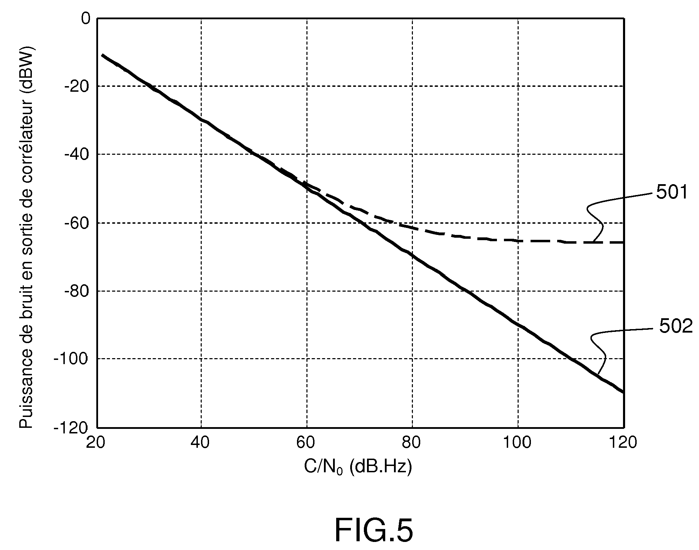

Le diagramme de la figure 5 représente la puissance de bruit en sortie du dispositif de corrélation 400, autrement dit la puissance de bruit globale mesurée sur la sortie de l'intégrateur 406, en fonction du rapport signal à bruit C/N0. La puissance de bruit globale comprend à la fois le bruit thermique et le bruit lié à l'intercorrélation.

La courbe 501 représente la puissance de bruit mesurée dans le cas où l'invention n'est pas mise en oeuvre. On remarque un plancher de bruit pour les forts rapports signal à bruit, ce plancher étant du au niveau d'intercorrélation entre les deux codes d'étalement qui n'est pas nul et qui devient prépondérant lorsque la puissance du bruit thermique devient négligeable.

La courbe 502 représente la puissance de bruit mesurée dans le cas où l'invention est utilisée. On voit que le plancher de bruit est supprimé et qu'à fort rapport signal à bruit, le niveau de bruit global est diminué par rapport à une solution classique où toutes les sorties de corrélation sont intégrées.

Le résultat de corrélation C obtenu en sortie de l'intégration cohérente 406 peut être utilisé, comme le sait l'Homme du métier, comme entrée d'un discriminateur de phase, de fréquence ou de code afin de réaliser les traitements habituels mis en oeuvre dans un récepteur GNSS pour effectuer le suivi de code, de phase ou de fréquence.

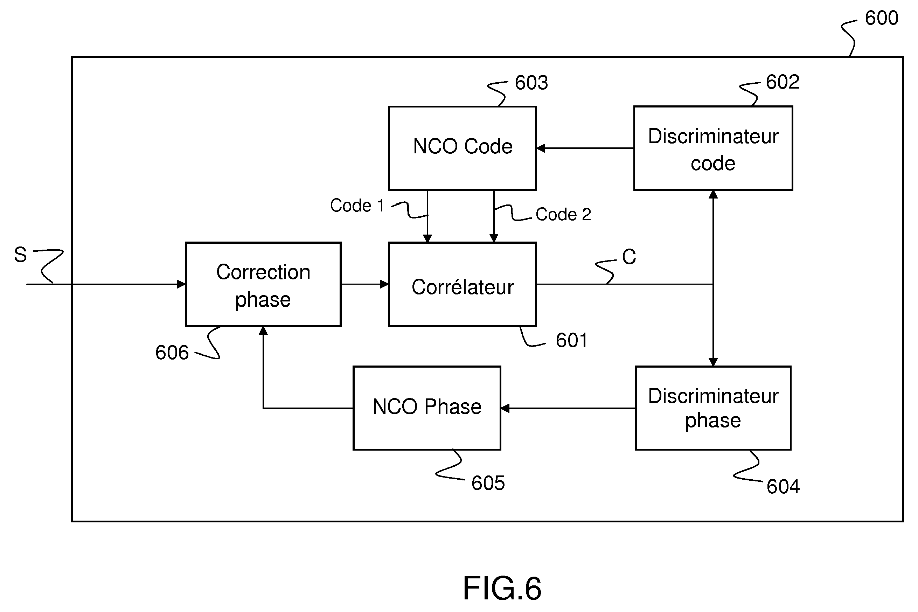

La figure 6 représente, sur un schéma, un récepteur 600 de radio-navigation par satellite selon l'invention. Un tel récepteur comporte un dispositif de corrélation 601 selon l'invention qui reçoit en entrée le signal S et produit en sortie une corrélation C qui est fournie à un discriminateur de code 602 puis à un opérateur de contrôle numérique NCO 603 qui vient piloter en avance ou en retard le positionnement des codes d'étalement locaux code1 et code 2 pour réaliser les corrélations avec le signal reçu.

Le récepteur 600 peut également comprendre un discriminateur de phase 604 associé à un opérateur de contrôle numérique NCO 605 qui délivre une estimée de l'erreur de phase à un correcteur 606 qui vient compenser l'erreur de phase du signal reçu.

Le récepteur 600 peut également comprendre d'autres éléments tels qu'un discriminateur de fréquence ou un estimateur de rapport signal à bruit qui ne sont pas représentés sur la figure 6.

L'Homme du métier, compte tenu de ses connaissances dans le domaine des récepteurs GNSS saura intégrer le dispositif de corrélation 601 selon l'invention avec les différents éléments nécessaires au suivi de synchronisation du signal de radio-navigation reçu pour réaliser toute autre variante du récepteur GNSS 600 décrit à la figure 6.

## Revendications

**1.** Méthode de corrélation d'un signal (S) de radio-navigation par satellite reçu composé d'un premier signal pilote modulé avec un premier code d'étalement (Code1) et d'un second signal de données modulé avec un second code d'étalement (Code2) primaire de longueur identique à celle du premier code d'étalement, ledit second signal de données étant en outre modulé avec une séquence secondaire comprenant une pluralité de chips, la durée d'un chip étant égale à un multiple de la longueur du second code d'étalement primaire (Code2), le premier signal pilote et le second signal de données étant synchrones, ladite méthode de corrélation:

- Des premières corrélations (101), sur une pluralité N de périodes dudit premier code d'étalement, du signal (S) de radio-navigation avec ledit premier code d'étalement (Code1),

ladite méthode étant **caractérisée en ce qu'**elle comprend :

- La sélection (104), parmi les N premières corrélations ($C_k$), d'un sous ensemble contenant un nombre M de corrélations, ledit sous-ensemble étant choisi en fonction d'une estimation (105) du rapport signal à bruit (C/N0) du signal reçu et du nombre de paires de chips de signes opposés parmi les chips de ladite séquence secondaire,
- L'intégration cohérente (106) des M corrélations dudit sous-ensemble.

**2.** Méthode de corrélation d'un signal de radio-navigation par satellite selon la revendication 1 dans laquelle le nombre M de corrélations dudit sous-ensemble est déterminé par simulation, ledit nombre M étant celui qui permet d'obtenir, sur le résultat d'intégration cohérente des M corrélations, le niveau de bruit global le plus faible en fonction d'un rapport signal à bruit donné et du nombre de paires de chips de signes opposés parmi les chips de ladite séquence secondaire.

**3.** Méthode de corrélation d'un signal de radio-navigation par satellite selon l'une des revendications précédentes dans laquelle ledit sous-ensemble contient au moins les premières corrélations en phase avec les chips de ladite séquence secondaire appartenant aux paires de chips de signes opposés.

**4.** Méthode de corrélation d'un signal de radio-navigation par satellite selon l'une des revendications précédentes dans laquelle ladite séquence secondaire est un code d'étalement secondaire.

**5.** Méthode de corrélation d'un signal de radio-navigation par satellite selon l'une des revendications 1 à 3 dans laquelle ladite séquence secondaire est une séquence de données dont les chips sont des symboles binaires obtenus par modulation de bits de données, ladite méthode de corrélation comprenant en outre des secondes corrélations (103), sur une pluralité N de périodes dudit second code d'étalement, du signal (S) de radio-navigation avec ledit second code d'étalement (Code2) pour en déduire les valeurs des chips de ladite séquence secondaire.

6. Méthode de corrélation d'un signal de radio-navigation par satellite selon l'une des revendications précédentes dans laquelle l'estimation (105) du rapport signal à bruit du signal reçu est déterminée à partir du résultat d'intégration cohérente des M corrélations.

7. Méthode de corrélation d'un signal de radio-navigation par satellite selon l'une des revendications précédentes dans laquelle le résultat d'intégration cohérente (C) des M corrélations est utilisé comme entrée d'un discriminateur de code ou de phase ou de fréquence.

8. Méthode de corrélation d'un signal de radio-navigation par satellite selon l'une des revendications précédentes dans laquelle ledit signal (S) est du type GALILEO E1.

9. Dispositif (400) de corrélation d'un signal (S) de radio-navigation par satellite reçu composé d'un premier signal pilote modulé avec un premier code d'étalement (Code1) et d'un second signal de données modulé avec un second code d'étalement primaire (Code2) de longueur identique à celle du premier code d'étalement, ledit second signal de données étant en outre modulé avec une séquence secondaire comprenant une pluralité de chips, la durée d'un chip étant égale à un multiple de la longueur du second code d'étalement primaire (Code2), le premier signal pilote et le second signal de données étant synchrones, le dispositif de corrélation comprenant:

   - Un premier corrélateur (401) pour effectuer des premières corrélations, sur un nombre entier N au moins égal à un de périodes dudit premier code d'étalement, du signal (S) de radio-navigation avec ledit premier code d'étalement (Code1),

   le dispositif de corrélation étant **caractérisé en ce qu'**il comprend :

   - Un sélecteur (404) pour sélectionner, parmi les N premières corrélations, un sous ensemble contenant un nombre M de corrélations, ledit sous-ensemble étant choisi en fonction d'une estimation du rapport signal à bruit du signal reçu et du nombre de paires de chips de signes opposés parmi les chips de ladite séquence secondaire,
   - Un intégrateur (406) pour effectuer l'intégration cohérente des M corrélations dudit sous-ensemble.

10. Dispositif (400) de corrélation d'un signal (S) de radio-navigation par satellite selon la revendication 9 comprenant en outre un second corrélateur (403) pour effectuer des secondes corrélations (103), sur une pluralité N de périodes dudit second code d'étalement, du signal (S) de radio-navigation avec ledit second code d'étalement (Code2) pour en déduire les valeurs des chips de ladite séquence secondaire.

11. Récepteur (600) de signaux de radio-navigation par satellite comprenant un dispositif de corrélation selon l'une des revendications 9 ou 10.

12. Programme d'ordinateur comportant des instructions pour l'exécution de la méthode de corrélation d'un signal de radio-navigation par satellite selon l'une quelconque des revendications 1 à 8, lorsque le programme est exécuté par un processeur.

13. Support d'enregistrement lisible par un processeur sur lequel est enregistré un programme comportant des instructions pour l'exécution de la méthode de corrélation d'un signal de radio-navigation par satellite selon l'une quelconque des revendications 1 à 8, lorsque le programme est exécuté par un processeur.


**Patentansprüche**

1. Verfahren zum Korrelierten eines empfangenen Satellitenfunknavigationssignals (S), zusammengesetzt aus einem ersten Pilotsignal, das mit einem ersten Spreizcode (Code1) moduliert ist, und einem zweiten Datensignal, das mit einem zweiten primären Spreizcode (Code2) von identischer Länge wie die des ersten Spreizcode moduliert ist, wobei das zweite Datensignal ferner mit einer sekundären Sequenz moduliert ist, die eine Mehrzahl von Chips umfasst, wobei die Dauer eines Chips gleich einem Vielfachen der Länge des zweiten primären Spreizcode (Code2) ist, wobei das erste Pilotsignal und das zweite Datensignal synchron sind, wobei das Korrelationsverfahren Folgendes beinhaltet:

   - erste Korrelationen (101), auf einer Mehrzahl N von Perioden des ersten Spreizcode, des Funknavigationssignals (S) mit dem ersten Spreizcode (Code1),

wobei das Verfahren **dadurch gekennzeichnet ist, dass** es Folgendes beinhaltet:

- Auswählen (104), aus den N ersten Korrelationen ($C_k$), eines Teilsatzes, der eine Anzahl M von Korrelationen enthält, wobei der Teilsatz in Abhängigkeit von einer Schätzung (105) des Signal-Rausch-Verhältnisses (C/N0) des empfangenen Signals und der Anzahl von Paaren von Chips mit entgegengesetzten Vorzeichen unter den Chips der zweiten Sequenz ausgewählt ist;
- kohärentes Integrieren (106) der M Korrelationen des Teilsatzes.

2. Verfahren zum Korrelierten eines Satellitenfunknavigationssignals nach Anspruch 1, wobei die Anzahl M von Korrelationen des Teilsatzes durch Simulation bestimmt wird, wobei die Anzahl M die ist, mit der, auf der Basis des Ergebnisses der kohärenten Integration der M Korrelationen, das niedrigste globale Rauschniveau erzielt werden kann, in Abhängigkeit von einem gegebenen Signal-Rausch-Verhältnis und der Anzahl von Paaren von Chips mit entgegengesetzten Vorzeichen unter den Chips der sekundären Sequenz.

3. Verfahren zum Korrelierten eines Satellitenfunknavigationssignals nach einem der vorherigen Ansprüche, wobei der Teilsatz wenigstens die ersten Korrelationen phasengleich mit den Chips der sekundären Sequenz enthält, die zu den Paaren von Chips mit entgegengesetzten Vorzeichen gehören.

4. Verfahren zum Korrelierten eines Satellitenfunknavigationssignals nach einem der vorherigen Ansprüche, wobei die sekundäre Sequenz ein sekundärer Spreizcode ist.

5. Verfahren zum Korrelierten eines Satellitenfunknavigationssignals nach einem der Ansprüche 1 bis 3, wobei die sekundäre Sequenz eine Datensequenz ist, deren Chips durch Modulieren von Datenbits erhaltene binäre Symbole sind, wobei das Korrelationsverfahren ferner zweite Korrelationen (103), auf einer Mehrzahl N von Perioden des zweiten Spreizcode, des Funknavigationssignals (S) mit dem zweiten Spreizcode (Code2) umfasst, um davon die Werte der Chips der sekundären Sequenz abzuleiten.

6. Verfahren zum Korrelierten eines Satellitenfunknavigationssignals nach einem der vorherigen Ansprüche, wobei die Schätzung (105) des Signal-Rausch-Verhältnisses des empfangenen Signals auf der Basis des Ergebnisses der kohärenten Integration der M Korrelationen bestimmt wird.

7. Verfahren zum Korrelierten eines Satellitenfunknavigationssignals nach einem der vorherigen Ansprüche, wobei das Ergebnis der kohärenten Integration (C) der M Korrelationen als Eingang in einen Code- oder Phasen- oder Frequenz-Diskriminator benutzt wird.

8. Verfahren zum Korrelierten eines Satellitenfunknavigationssignals nach einem der vorherigen Ansprüche, wobei das Signal (S) vom GALILEO E1 Typ ist.

9. Vorrichtung (400) zum Korrelieren eines empfangenen Satellitenfunknavigationssignals (S), zusammengesetzt aus einem ersten Pilotsignal, das mit einem ersten Spreizcode (Code1) moduliert ist, und einem zweiten Datensignal, das mit einem zweiten primären Spreizcode (Code2) von identischer Länge wie die des ersten Spreizcode moduliert ist, wobei das zweite Datensignal ferner mit einer sekundären Sequenz moduliert ist, die eine Mehrzahl von Chips umfasst, wobei die Dauer eines Chips gleich einem Vielfachen der Länge des zweiten primären Spreizcode (Code2) ist, wobei das erste Pilotsignal und das zweite Datensignal synchron sind, wobei die Korrelationsvorrichtung Folgendes umfasst:

- einen ersten Korrelator (401) zum Durchführen von ersten Korrelationen, auf einer ganzen Zahl N, die wenigstens gleich einer der Perioden des ersten Spreizcode ist, des Funknavigationssignals (S) mit dem ersten Spreizcode (Code1),

wobei die Korrelationsvoruchtung **dadurch gekennzeichnet ist, dass** sie Folgendes umfasst:

- einen Selektor (404) zum Auswählen, aus den N ersten Korrelationen, eines Teilsatzes, der eine Anzahl M von Korrelationen enthält, wobei der Teilsatz in Abhängigkeit von einer Schätzung des Signal-Rausch-Verhältnisses des empfangenen Signals und der Anzahl von Paaren von Chips mit entgegengesetzten Vorzeichen unter den Chips der sekundären Sequenz ausgewählt ist;

- einen Integrator (406) zum kohärenten Integrieren der M Korrelationen des Teilsatzes.

10. Vorrichtung (400) zum Korrelierten eines Satellitenfunknavigationssignals (S) nach Anspruch 9, die ferner einen zweiten Korrelator (403) zum Durchführen von zweiten Korrelationen (103), auf einer Mehrzahl N von Perioden des zweiten Spreizcode, des Funknavigationssignals (S) mit dem zweiten Spreizcode (Code2) umfasst, um davon die Werte der Chips der sekundären Sequenz abzuleiten.

11. Satellitenfunknavigationssignalempfänger (600), der eine Korrelationsvorrichtung nach Anspruch 9 oder 10 umfasst.

12. Computerprogramm, das Befehle zum Ausführen des Verfahrens zum Korrelieren eines Satellitenfunknavigationssignals nach einem der Ansprüche 1 bis 8 umfasst, wenn das Programm von einem Prozessor abgearbeitet wird.

13. Prozessorlesbarer Aufzeichnungsträger, auf dem ein Programm gespeichert ist, das Befehle zum Ausführen des Verfahrens zum Korrelierten eines Satellitenfunknavigationssignals nach einem der Ansprüche 1 bis 8 umfasst, wenn das Programm von einem Prozessor abgearbeitet wird.

## Claims

1. A method for correlating a received satellite radio navigation signal (S) made up of a first pilot signal modulated with a first spreader code (Code1) and a second data signal modulated with a second primary spreader code (Code2) of identical length to that of said first spreader code, said second data signal further being modulated with a secondary sequence comprising a plurality of chips, the duration of a chip being equal to a multiple of the length of said second primary spreader code (Code2), said first pilot signal and said second data signal being synchronous, said corrélation method comprising:

   - first correlations (101), on a plurality N of periods of said first spreader code, of said radio navigation signal (S) with said first spreader code (Code1),

   said method being **characterised in that** it comprise:

   - selecting (104), from among the N first correlations ($C_k$), a sub-set containing a number M of correlations, said sub-set being selected as a function of an estimate (105) of the signal-to-noise ratio (C/N0) of said received signal and of the number of pairs of chips with opposite signs among the chips of said secondary sequence;
   - coherently integrating (106) M correlations of said sub-set.

2. The method for correlating a satellite radio navigation signal according to claim 1, wherein the number M of correlations of said sub-set is determined by simulation, said number M being that which allows the lowest global noise level to be obtained, based on the result of the coherent integration of the M correlations, as a function of a given signal-to-noise ratio and of the number of pairs of chips with opposite signs among the chips of said secondary sequence.

3. The method for correlating a satellite radio navigation signal according to any one of the preceding claims, wherein said sub-set contains at least the first correlations in phase with the chips of said secondary sequence belonging to the pairs of chips with opposite signs.

4. The method for correlating a satellite radio navigation signal according to any one of the preceding claims, wherein said secondary sequence is a secondary spreader code.

5. The method for correlating a satellite radio navigation signal according to any one of claims 1 to 3, wherein said secondary sequence is a data sequence, the chips of which are binary symbols obtained by modulating data bits, said correlation method further comprising second correlations (103), on a plurality N of periods of said second spreader code, of said radio navigation signal (S) with said second spreader code (Code2), so as to deduce therefrom the values of the chips of said secondary sequence.

6. The method for correlating a satellite radio navigation signal according to any one of the preceding claims, wherein the estimate (105) of the signal-to-noise ratio of said received signal is determined on the basis of the result of the coherent integration of the M correlations.

7. The method for correlating a satellite radio navigation signal according to any one of the preceding claims, wherein the result of the coherent integration (C) of the M correlations is used as input for a code or phase or frequency discriminator.

8. The method for correlating a satellite radio navigation signal according to any one of the preceding claims, wherein said signal (S) is of the GALILEO E1 type.

9. A device (400) for correlating a received satellite radio navigation signal (S) made up of a first pilot signal modulated with a first spreader code (Code1) and a second data signal modulated with a second primary spreader code (Code2) of identical length to that of said first spreader code, said second data signal further being modulated with a secondary sequence comprising a plurality of chips, the duration of a chip being equal to a multiple of the length of said second primary spreader code (Code2), said first pilot signal and said second data signal being synchronous, said correlation device composing:

   - a first correlator (401) for carrying out first correlations, on an integer N at least equal to one of the periods of said first spreader code, of said radio navigation signal (S) with said first spreader code (Code1),

   said correlation device being **characterised in that** it comprises:

   - a selector (404) for selecting, from among the N first correlations, a sub-set containing a number M of correlations, said sub-set being selected as a function of an estimate of the signal-to-noise ratio of said received signal and of the number of pairs of chips with opposite signs among the chips of said secondary sequence;
   - an integrator (406) for coherently integrating the M correlations of said sub-set.

10. The device (400) for correlating a satellite radio navigation signal (S) according to claim 9, further comprising a second correlator (403) for carrying out second correlations (103), on a plurality N of periods of said second spreader code, of said radio navigation signal (S) with said second spreader code (Code2) in order to deduce therefrom the values of the chips of said secondary sequence.

11. A satellite radio navigation signal receiver (600) comprising a correlation device according to any one of claims 9 or 10.

12. A computer program comprising instructions for executing the method for correlating a satellite radio navigation signal according to any one of claims 1 to 8, when said programme is executed by a processor.

13. A processor-readable recording medium which stores a programme comprising instructions for executing the method for correlating a satellite radio navigation signal according to any one of claims 1 to 8, when said programme is executed by a processor.

EP 2 908 154 B1

FIG.1

FIG.2

EP 2 908 154 B1

FIG.3

FIG.4

EP 2 908 154 B1

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2009189808 A

### Littérature non-brevet citée dans la description

- **MUTHURAMAN KANNAN.** *Performance évaluation of L2C data/pilot combined carrier tracking*

- **TRAN.** *Performance évaluations of the new GPS L5 and L2 civil (L2C) signais*